# EUROPÄISCHE PATENTSCHRIFT

(11) **EP 2 732 306 B1**
(45) Veröffentlichungstag und Bekanntmachung des Hinweises auf die Patenterteilung: **13.04.2016**
(21) Anmeldenummer: 12740281.6
(22) Anmeldetag: 27.06.2012
(51) Int. Cl.: G01S 13/89, G01S 13/95, G06T 5/00, G06T 5/50

(54) **VERFAHREN ZUR VERVOLLSTÄNDIGUNG UND BERICHTIGUNG VON DIGITALEN WETTERRADARBILDERN**
METHOD FOR COMPLETING AND CORRECTING DIGITAL WEATHER RADAR IMAGES
PROCÉDÉ POUR COMPLÉTER ET CORRIGER LES IMAGES RADAR MÉTÉOROLOGIQUES NUMÉRIQUES

(30) Priorität: 15.07.2011 AT 10502011
(43) Veröffentlichungstag der Anmeldung: 21.05.2014
(73) Patentinhaber: MeteoServe Wetterdienst GmbH, 1030 Wien (AT); Austro Control Österreichische Gesellschaft für Zivilluftfahr mit beschränkter Haftung, 1030 Wien (AT); Joanneum Research Forschungsgesellschaft mbH, 8010 Graz (AT); AIT Austrian Institute of Technology GmbH, 1220 Wien (AT)
(72) Erfinder: GANSTER, Harald, A-8042 Graz (AT); MAYER, Heinz, A-8043 Graz (AT); HENNERMANN, Karin, A-1160 Wien (AT); KERSCHBAUM, Markus, A-1150 Wien (AT); CROONEN, Gerardus, A-1150 Wien (AT); NOWAK, Christoph, A-1100 Wien (AT)
(74) Vertreter: Wildhack & Jellinek
(86) Internationale Anmeldenummer: PCT/AT2012/050088
(87) Internationale Veröffentlichungsnummer: WO 2013/010200

(56) Entgegenhaltungen:
- US-A- 5 828 332
- US-A1- 2009 066 563
- US-B1- 7 427 943

## Beschreibung

Die Erfindung betrifft ein Verfahren zur Vervollständigung und/oder Berichtigung von digitalen Wetterradarbildern gemäß dem Oberbegriff des Patentanspruches 1.
Weiters betrifft die Erfindung einen Datenträger gemäß Patentanspruch 11.
Die Erfindung wird gewerblich zur Vorhersage von Unwettern im Bereich der kommerziellen Meteorologie eingesetzt.

Wetterradarbilder weisen üblicherweise eine Vielzahl von Artefakten auf, die durch die Aufnahme der Wetterradarbilder bedingt sind. In Wetterradarbildern treten einerseits Artefakte auf, die durch statische Abschattungen bedingt sind, das heißt, dass Bereiche des Wetterradarbildes, die durch näher bei Wetterradar gelegene Gegenstande, etwa Berge, verdeckt sind, nicht angezeigt werden können. Weiters können durch atmosphärische Einflüsse, Funk oder andere elektromagnetische Wellen zusätzliche Artefakte auf einzelnen Wetterradarbildern entstehen, die eine zuverlässige Vorhersage, insbesondere durch automatisierte Detektionsverfahren, verhindern können.

Aus dem Stand der Technik ist das Dokument US 5828332 bekannt, ein System zur Darstellung eines Wetterradars sowie einer Terrainkarte für Luftfahrtzeuge zeigt, wobei Terrainhöhe und Wetterinformation einfach verständlich übereinander angezeigt werden. Das System umfasst eine Antenne zum Aussenden und Empfangen von Radarsignalen, eine Digitalisierungseinrichtung zur Digitalisierung empfangener reflektierter Radarwellen sowie Mittel zum Abspeichern der Signale und zur Berechnung von Längen- und Breitenkoordinaten der im Signal enthaltenen Merkmale.

Weiters ist aus dem Stand der Technik das Dokument US 2009/0066563 A1 bekannt. Die darin enthaltene Erfindung bezieht sich auf ein Verfahren und eine Vorrichtung und ein Computerprogramm zur Korrektur von Wetterdaten, die mittels eines Wetterradarechos erstellt wurden. Zur Vermeidung von Fehlern aufgrund von Radarechos oder Interferenzen werden die ermittelten Wetterdaten mit einer vorab ermittelten Karte verglichen und anhand dieser Karte berichtigt.

Aus der Veröffentlichung US 7427943 ist ein Verfahren zur Echtzeitdarstellung dreidimensionaler Wetterinformationen bekannt. Eine erste Repräsentation eines Wetterereignisses entlang einer ersten Ebene wird aus Daten generiert, die aus einem ersten Radarscan stammen. Eine zweite Repräsentation eines Wetterereignisses entlang einer zweiten Ebene wird aus Daten eines zweiten Radarscans generiert. Die erste und die zweite Ebene sind dabei nicht koplanar. Die erste und die zweite Repräsentation werden miteinander kombiniert, wodurch ein dreidimensionales Modell des Wetterereignisses erhalten wird. Eine dreidimensionale Form des Ereignisses wird erstellt und mittels einer Anzeigeeinheit dargestellt.

Aufgabe der Erfindung ist es, die oben genannten Artefakte bzw. Messfehler in bestehenden Wetterradarbildern zu beseitigen und Wetterradarbilder zur Verfügung zu stellen, die frei von den vorstehend genannten Artefakten sind.

Die Erfindung löst diese Aufgabe mit den kennzeichnenden Merkmalen des Patentanspruchs 1.

Bei einem Verfahren zur Vervollständigung und/oder Berichtigung von digitalen Wetterradarbildern, wobei
a) das Wetterradarbild in Form eines zweidimensionalen Digitalbilds vorliegt, wobei jedes Pixel des Wetterradarbilds jeweils einem Teilgebiet des mit dem Wetterradar überwachten Gebiets zugeordnet ist,
b) jedem Pixel ein Reflektivitätswert zugeordnet ist und jeder Reflektivitätswert der mit dem Wetterradar ermittelten elektromagnetischen Reflektivität der Luftschichten im Bereich des dem jeweiligen Pixel zugeordneten Teilgebiets entspricht, und wobei
c) das Wetterradarbild in einem vorab bekannten und durch eine vorgegebene Pixelmaske gegebenen Bildbereich fehlerhafte Reflektivitätswerte aufweist, ist vorgesehen,
d) dass eine Anzahl von Satellitenbildern herangezogen wird, die das vom Wetterradar überwachte Gebiet abbilden, wobei die einzelnen Satellitenbilder die vom vom Wetterradar überwachten Gebiet reflektierte Strahlung bei unterschiedlichen Wellenlängen darstellen,
e) dass den Pixeln der Satellitenbilder jeweils mehrere unterschiedliche Strahlungswerte bei vorgegebenen Wellenlängen zugeordnet werden, wobei die Pixel der Satellitenbilder den jeweiligen Strahlungswert eines vom Wetterradar überwachten und dem jeweiligen Pixel des Wetterradarbilds zugeordneten Teilgebiets zugeordnet enthalten,
f) wobei jeweils diejenigen Pixel der Satellitenbilder und diejenigen Pixel des Wetterradarbilds einander gegenseitig zugeordnet werden, denen dasselbe Teilgebiet zugeordnet ist,
g) dass die in der vorgegebenen Umgebung der Pixelmaske befindlichen Pixel des Wetterradarbilds ausgewählt werden,
h) dass für jedes der ausgewählten Pixel des Wetterradarbilds Eingangsdatensätze für ein Fitting-Verfahren erstellt werden, die jeweils den Reflexionswert des Wetterradarbilds in einem der ausgewählten Pixel sowie die Strahlungswerte in den dem ausgewählten Pixel zugeordneten Pixel der Satellitenbilder enthalten, denen dasselbe Teilgebiet zugeordnet ist,
i) dass mittels des Fitting-Verfahrens eine Fitting-Funktion f erstellt wird, die bei gegebenen Werten für die Strahlungswerte einen Schätzwert für den Reflektivitätswert im selben Pixel des Wetterradarbilds und für dasselbe Teilgebiet liefert,
   wobei die Eingangsdatensätze dem Fitting-Verfahren zugrunde gelegt werden, und
j) dass für jedes der Pixel der Pixelmaske
   - die dem jeweiligen Pixel des Wetterradarbilds zugeordneten Pixel der Satellitenbilder herangezogen werden und die Fitting-Funktion auf deren Strahlungswerte angewendet wird, und
   - der aus der Fitting-Funktion resultierende Schätzwert J= f(SI1, SI2, SI3, ...) ermittelt wird und
   - die fehlerhaften Reflektivitätswerte des jeweiligen Pixels durch den Schätzwert ersetzt werden.

Durch dieses Verfahren werden Artefakte wirksam beseitigt, in den Bereichen des Wetterradarbilds, die Artefakte beinhalten, liegen plausible nach Durchführung des erfindungsgemäßen Verfahrens plausible Ersatzdaten vor. Eine automatisierte Weiterverarbeitung der Wetterradardaten ist somit möglich.

Um besonders vorteilhafte Ersatzwerte für das Wetterradarbild zu erhalten, kann vorgesehen sein, dass die Zeitspanne zwischen der Aufnahme des Wetterradarbilds und der Aufnahme der Satellitenbilder unterhalb eines vorgegebenen Schwellenwerts liegt, insbesondere dass das Wetterradarbild und die Satellitenbilder am selben Tag aufgenommen werden.

Eine verbesserte Einpassung bzw. Interpolation der Ersatzwerte in das Wetterradarbild wird erreicht, wenn als Fitting-Verfahren ein Klassifikationsverfahren verwendet wird.

Eine besonders vorteilhafte Auswahl der Pixelmaske kann vorgenommen werden, indem die Umgebung diejenigen Pixel umfasst, die, vorzugsweise unmittelbar, an die Randpixel der Pixelmaske angrenzen und/oder außerhalb der Pixelmaske liegen. Es werden lediglich Pixel von diejenigen Bereichen, in denen sich tatsächlich Artefakte befinden, mit Ersatzwerten überschrieben.

Es kann vorgesehen sein, dass die Pixelmaske nach vorab vorgegebenen Kriterien bestimmt wird.

Zur besonders vorteilhaften Erkennung und Korrektur von Artefakten, die durch atmosphärische oder elektromagnetische Einflüsse verursacht sind, kann vorgesehen sein, dass Bereiche des Wetterradarbilds, die die Form von gerade Linien oder Kreisbögen aufweisen, als fehlerhaft angesehen werden und der Pixelmaske zugeordnet werden.

Zur Detektion typischer, in Wetterradarbildern auftretender Fehler sowie zur Unterscheidung von Artefakten bzw. Fehlern und korrekten Abbildungen von üblicherweise auftretenden Phänomenen kann vorgesehen sein, dass eine Pixelmaske erstellt wird, indem
- für jedes der Pixel des Wetterradarbilds eine Pixelumgebung bestimmt wird
- die Pixelumgebung jeweils mit einer der Form und Größe der Pixelumgebung entsprechenden, vorgegebenen Textur verglichen wird, wobei ein Vergleichsmaß ermittelt wird und
- das Vergleichsmaß mit einem vorgegebenen Schwellenwert verglichen wird,
- wobei je nach Überschreiten oder Unterschreiten des Schwellenwerts durch das Vergleichsmaß das jeweilige Pixel der Pixelmaske zugeordnet wird.

Zur Erkennung statischer Abschattungen kann vorgesehen sein,
dass zur Erstellung der Pixelmaske für ein Wetterradarbild eine Vielzahl von weiteren Wetterradarbildern desselben zu überwachenden Gebiets zu unterschiedlichen Zeitpunkten herangezogen wird,
dass die weiteren Wetterradarbilder auf Abschattungsbereiche untersucht werden, die in den weiteren Wetterradarbildern unabhängig von Tages- und Jahreszeit sowie Wetterlage identische, insbesondere sehr geringe, zugeordnete Reflektivitätswerte, vorzugsweise Null, aufweisen, und
dass die Pixel der Abschattungsbereiche der Pixelmaske zugeordnet werden.

Zur Behebung von Fehlern oder Artefakten unterschiedlichen Ursprungs kann vorgesehen sein, dass voneinander unterschiedliche weitere Pixelmasken, insbesondere nach einem oder mehreren der Ansprüche 6 bis 8, erstellt werden und
dass eine Pixelmaske erstellt wird, wobei ein Pixel der Pixelmaske dann zugeordnet wird, wenn zumindest eine oder zumindest eine vorgegebene Anzahl der weiteren Pixelmasken dieses Pixel umfasst.

Zur verbesserten Anpassung der Fehlerbehebung an unterschiedliche geographische Gegebenheiten bzw. an unterschiedliche Arten von Artefakten kann vorgesehen sein, dass für jeden zusammenhängenden Teilbereich separat eine weitere Fitting-Funktion f' bestimmt werden, wobei diese weitere Fitting-Funktion f' bei der Bestimmung des jeweiligen Schätzwerts nur auf die Pixel des jeweiligen zusammenhängenden Teilbereich angewendet wird.

Die Erfindung wird ohne Einschränkung des allgemeinen Erfindungsgedankens anhand eines Beispiels dargestellt. Der Erläuterung dieses Beispiels dienen die Fig. 1 bis 10.
**Fig. 1** zeigt ein Wetterradarbild mit einer Pixelmaske, die einen Bildbereich mit fehlerhaften Reflektivitätswerten darstellt.
**Fig. 2** zeigt schematisch ein Gebiet, mit einem Wetterradar.
**Fig. 3** zeigt schematisch mehrere Satellitenbilder.
**Fig. 4** zeigt eine Anzahl von Eingangsdatensätzen, die dem Fitting-Verfahren zugrunde gelegt werden.
**Fig. 5a** bis **5d** zeigen fehlerhafte Wetterradarbilder, wobei die Bildfehler durch Abschattungen entstanden sind.
**Fig. 6a, 6b** zeigen fehlerhafte Wetterradarbilder mit andersartigen, z.B. kreisbogenförmigen oder linienförmigen Bildfehlern.
**Fig. 7** zeigt den Vergleich von Pixelumgebungen mit einer vorgegebenen Textur.
**Fig. 8a** bis **8c** zeigen ein besonderes Verfahren zur Bereitstellung einer Pixelmaske mit mehreren weiteren Pixelmasken.
**Fig. 9** zeigt eine Pixelmaske mit mehreren nicht zusammenhängenden Teilbereichen.

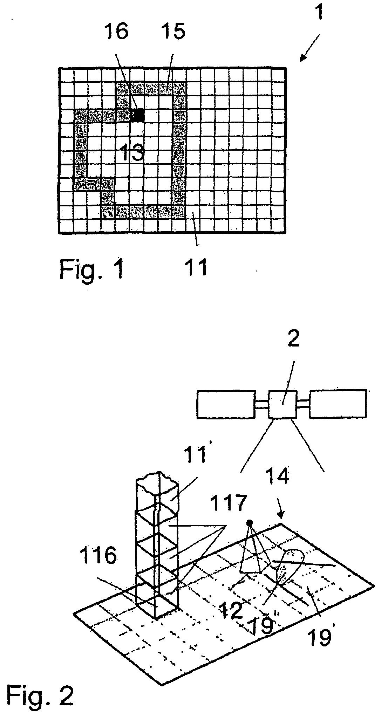

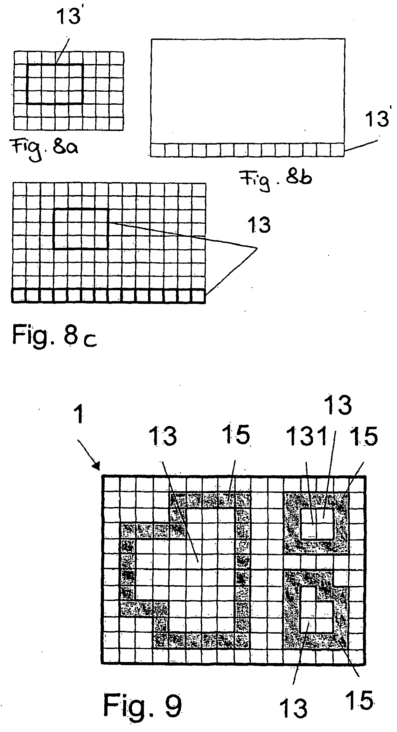

Wetterradarbilder 1 werden von einem oder mehreren Wetterradars 12 erstellt und in der Vorhersage von Unwettern im Bereich der kommerziellen Meteorologie eingesetzt, etwa zur Regelung des Luftverkehrs oder zur Warnung vor Unwettern, starken Niederschlägen usw.
Wetterradarbilder 1 liegen typischerweise in Form von zweidimensionalen Digitalbildern (Fig. **1****)** umfassend eine Anzahl von rasterförmig angeordneten Pixeln 11 vor. Der von einem oder mehreren Wetterradars 12 überwachte Bereich ist in eine Anzahl von Teilgebieten 110 zerlegt, wobei jedes Teilgebiet 110 jeweils einem Pixel 11 des Wetterradarbilds 1 entspricht. **(****Fig. 2****)** In kommerziellen Anwendungen weisen die Teilgebiete 110, die einem Pixel entsprechen, etwa die Fläche von einem Quadratkilometer auf. Insbesondere sind die Teilgebiete 110 quadratisch.
Bei der Aufnahme des Wetterradarbilds 1 mittels des Wetterradars 12 kann die einem Teilbereich 110 bzw. einem Pixel 11 zugeordnete Reflektivität folgendermaßen bestimmt werden: Das Wetterradar 1 misst die Reflektivität von Raumvolumina 117, die übereinander über der Fläche 116 des Teilgebiets 110 in Form einer Säule angeordnet sind. Jedem der Raumvolumina 117 ist ein seiner jeweiligen Reflektivität entsprechender Digitalwert zugeordnet. Innerhalb des säulenförmigen Teilgebiets 110 wird dasjenige Raumvolumen 117 ermittelt, in dem die höchste Reflektivität vorherrscht. Anschließend wird der Reflektivitätswert dieses Raumvolumens 117 als Wert für die Reflektivität des gesamten Teilgebietes 110 herangezogen. Aus diesem Wert lässt sich der gesamte zu erwartende Niederschlag in der Nähe des Teilgebiets 110 ermitteln. Somit lässt sich ein zweidimensionales Digitalbild, im folgenden das Wetterradarbild 1, erstellen, wobei jedem Teilgebiet 110 bzw. jedem Pixel 11 ein digitaler Wert für die Reflektivität I1, I2 ... zugewiesen ist. Derartige Bilder sind in **Fig. 9** dargestellt.

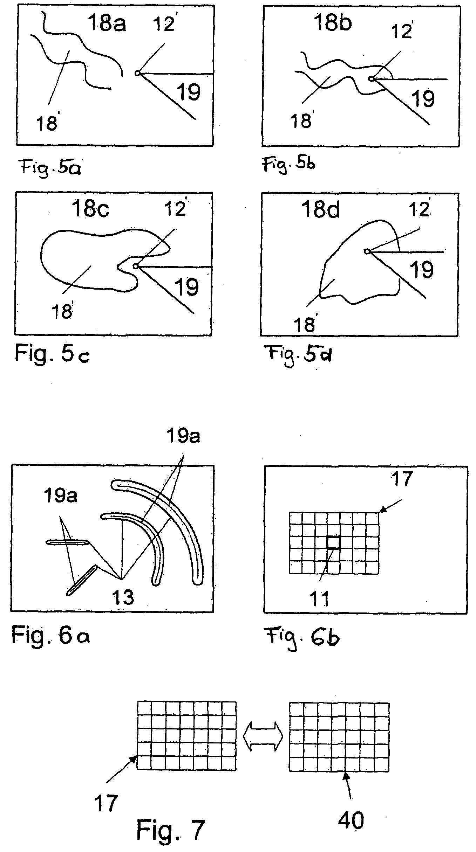

Wie in den **Fig. 5a** bis **5d** dargestellt, können mit einem Wetterradar 12 aufgenommene Bilder 1 fehlerhaft sein. Die Fehler von Wetterradarbildern 1 können unterschiedliche Ursachen haben, die Gründe für manche der Fehler sind bislang noch nicht erforscht, sodass eine Behebung dieser Fehler durch Verbesserung der Messmethoden nicht möglich ist. Die Gründe für die Fehler sind unterschiedlicher Natur, wobei die Fehler phänomenologisch in drei Hauptklassen eingeteilt werden können.

Zum einen können die Fehler von statischen Abschattungen 19 herrühren (Fig. 2), die etwa durch Berge oder Hindernisse verursacht werden, die sich im Aufnahmebereich des Wetterradars 12 befinden. Solche statische Abschattungen 19 sind relativ einfach zu detektieren und ändern sich über die Zeit nicht, soferne sich das Hindernis weiterhin im Aufnahmebereich des Wetterradars 12 befindet. **Fig. 5a** bis **5d** zeigen vier Bilder mit unterschiedlicher Wetterlage, wobei allen Bildern gemeinsam ist, dass im Bereich der Abschattung 19 die jeweiligen Reflektivitätswerte 11, I2 ... konstant sehr niedrig, insbesondere Null sind. Bild 18a **(****Fig. 5a****)** zeigt ein erstes Wetterradarbild mit einer Wolkenschicht 180. Die weiteren in **Fig. 5b** bis **5d** dargestellten Wetterradarbilder 18a - 18d zeigen die Wolkenschicht 180 im weiteren Zeitverlauf. Im Wetterradarbild 18b **(****Fig. 5b****)** befindet sich die Wolkenschicht 180 im Bereich desjenigen Pixels 120, das dem Teilgebiet 110 zugeordnet ist, in dem sich das Wetterradar 12 befindet.

Unmittelbar neben dem Wetterradar 12 befindet sich ein Hindernis 191, das den gesamten Bereich 190 südwestlich des Wetterradars abschattet **(****Fig. 2****).** Der abgeschattete Bereich 190 liegt somit in einem durch das Wetterradar 12 nicht mehr erfassbaren Gebiet, die Reflexionswerte innerhalb des abgeschatteten Bereichs 190 können nicht ermittelt werden. Somit ergibt sich auf den Wetterradarbildern 18a - 18d in **Fig. 5a** bis **5d** eine statische Abschattung 19, deren Reflektivitätswerte I1, I2 ... nicht den wahren Gegebenheiten entsprechen und somit als fehlerhaft zu behandeln sind.
Die Bestimmung der gegebenenfalls von der Höhe der Wolkenformation abhängigen statischen Abschattungen 19 des Wetterradarbilds 1; 18a-18d bzw. der abgeschatteten Bereiche 190 kann grundsätzlich als Kalibrierungsschritt vorgenommen werden und muss nur nach Änderungen der örtlichen Gegebenheiten (Felssturz, Entfernung eines störenden Gebäudes, usw.) erneut vorgenommen werden. Dabei wird eine Vielzahl von zu unterschiedlichen Zeitpunkten aufgenommenen Wetterradarbildern 18a-18d herangezogen und miteinander verglichen. Es wird nach denjenigen Pixeln 11 gesucht, deren zugeordnete Reflektivitätswerte I1, I2 ... einen unveränderten, insbesondere sehr geringen Wert, gegebenenfalls Null, aufweisen. Diejenigen Teilgebiete 110, denen unabhängig von Tages- und Jahreszeit stets gleiche Reflektivitätswerte zugewiesen sind, werden als einem abgeschatteten Bereich 190 zugehörig erkannt. Die jeweiligen den Teilgebieten 110 zugeordneten Pixel 11 werden als dem Abschattungsbereich 19 zugehörig erkannt. Schließlich wird eine Pixelmaske 13 erstellt, der sämtliche der dem Abschattungsbereich 19 zugehörigen Pixel 11 des Wetterradarbilds 1 zugeordnet werden. Die Pixelmaske 13 enthält somit diejenigen Pixel, die fehlerhafte Intensitätswerte enthalten.

Weiters bestehen bestimmte Fehler bei der Aufnahme von Wetterradarbildern 1 darin, dass linienförmige oder kreisbogenförmige Artefakte 19a **(****Fig. 6****)** mit sehr hohen Reflektivitätswerten detektiert werden. Der Grund für solche Artefakte ist bislang noch nicht vollständig aufgeklärt, es wird aber vermutet, dass die Störungen durch lokale Funksender, WLANs oder Militärfunk usw. verursacht werden.
Es kann vorgesehen werden, dass das gesamte Bild einer zusätzlichen, systematischen Analyse unterzogen wird. Dabei kann festgestellt werden, dass einzelne Bereiche des transformierten Bildes besonders hohe Werte aufweisen. Diese hohen Werte entsprechen den kreisbogenförmigen bzw. linienförmigen Artefakten. Den erkannten Bereichen lässt sich im Wetterradarbild 1 ein eindeutiger Raumbereich 19a zuordnen; die Pixel, die innerhalb des Raumbereichs liegen werden der Pixelmaske 13 zugeordnet.

Schließlich besteht noch die Möglichkeit, Pixel 11 mit fehlerhaften Reflektivitätswerten I1, I2 ... durch einen Mustervergleich mit einer Textur 40 zu ermitteln **(****Fig. 7****).** Für jedes der Pixel wird eine Pixelumgebung 17 **(****Fig. 6b****)** bestimmt, die eine vorgegebene Form und Größe aufweist. Im vorliegenden Fall wird eine Pixelumgebung von 5x5 Pixeln gewählt, wobei das jeweilige Pixel 11 im Zentralpunkt der Pixelumgebung 17 liegt. Die ideale Pixelumgebung kann in Abhängigkeit der Eingangsdaten auch größer oder kleiner gewählt werden. Weiters wird noch eine Textur 40 vorgegeben, deren Form und Größe der Pixelumgebung 17 entspricht. Als Texturen 40 können insbesondere fehlerfreie Teilausschnitte von bereits erstellten Wetterradarbildern 1 herangezogen werden, deren Form und Größe der Pixelumgebung 17 entspricht. Bei der Textur 40 handelt es sich um ein Digitalbild, wobei jedem Pixel ein Intensitätswert zugewiesen ist.
Für jedes Pixel kann nun die Pixelumgebung 17 mit der vorgegebenen Textur 40 verglichen werden. Durch die gleiche Größe und Form von Pixelumgebung 17 und Textur 40 korrespondiert jedes der Pixel der Textur 40 mit jeweils einem Pixel der Pixelumgebung und umgekehrt. Dabei werden die Intensitätswerte bzw. Reflektivitätswerte der einzelnen miteinander korrespondierenden Pixel der Pixelumgebung 17 und der Textur 40 miteinander verglichen, wobei schließlich ein Vergleichsmaß zum Vergleich der Pixelumgebung 17 mit der Textur 40 ermittelt wird. Dies kann etwa derart geschehen, dass für jedes der Pixel der Pixelumgebung 17 die Wurzel der Summe der Quadrate der Differenz aller Intensitätswerte bzw. Reflektivitätswerte jeweils miteinander korrespondierender Pixel der Pixelumgebung 17 bzw. der Textur 40 gebildet wird. Selbstverständlich können auch andere Ähnlichkeitsmaße verwendet werden, die ganz allgemein zum Vergleich zweier gleich großer Digitalbilder geeignet sind und einen Wert liefern, der bei Übereinstimmung der Bilder einen maximalen bzw. minimalen Wert annimmt, etwa ein Korrelationsmaß oder ein Distanzmaß.
Diejenigen Pixel 11, für die ein Vergleich zwischen der jeweiligen Pixelumgebung mit der Textur 40 keine Übereinstimmung ergibt, werden der Pixelmaske 13 zugeordnet.
Alternativ können als Texturen auch typische Artefakte oder Falschbilder herangezogen werden. In diesem Fall werden Pixel 11, für die ein Vergleich zwischen der jeweiligen Pixelumgebung 17 mit der Textur 40 eine große Übereinstimmung ergibt, als fehlerhaft angesehen und der Pixelmaske 13 zugeordnet.
Eine Übereinstimmung wird je nach Übereinstimmungsmaß daran gemessen, ob das Übereinstimmungsmaß einen bestimmten vorgegebenen Schwellenwert übersteigt oder unterschreitet.

Selbstverständlich können auch zur Verbesserung der Detektion von fehlerhaften Bereichen in Wetterradarbildern 1 mehrere unterschiedliche Verfahren herangezogen werden **(****Fig. 8a** bis **8c****).** Dabei können die vorstehend beschriebenen Verfahren zur Erstellung einer Pixelmaske 13 zur Erstellung von mehreren weiteren Pixelmasken 130 herangezogen werden. Dabei können insbesondere mehrere Texturen 40 gewählt werden und basierend auf jeder einzelnen Textur 40 eine weitere Pixelmaske erstellt werden. Die einzelnen weiteren Pixelmasken 130 weisen jeweils dieselbe Form und Größe auf, wobei jeweils ein Pixel 11 einer weiteren Pixelmaske 130 jeweils allen übrigen Pixeln 11 der jeweils anderen weiteren Pixelmasken 130 zugeordnet ist, die in Bezug auf die jeweilige weitere Pixelmaske 130 an der selben Position sind. Es wird schließlich eine Pixelmaske 13 basierend auf den weiteren Pixelmasken 130 erstellt, die dieselbe Form und Größe aufweist wie die weiteren Pixelmasken 130.
Ein Pixel 11 des Wetterradarbilds 1 wird genau dann der Pixelmaske 13 zugeordnet, wenn es zumindest einer, insbesondere zumindest einer vorgegebenen Anzahl von weiteren Pixelmasken 130, zugeordnet ist.

Nach Abschluss des vorstehend beschriebenen Fehlerdetektionsschritts liegt eine Pixelmaske 13 vor, der diejenigen Pixel 11 zugeordnet sind, deren zugehörige Reflektivitätswerte als fehlerhaft erkannt worden sind.
Der im folgenden dargestellte Schritt kann mit einer Vielzahl von unterschiedlichen Pixelmasken 13 durchgeführt werden und ist nicht auf eine Pixelmaske 13 beschränkt.

Insbesondere kann das im folgenden beschriebene Verfahren unabhängig von der Art der Bestimmung der Pixelmaske 13 durchgeführt werden.

Das Ziel des Verfahrens besteht darin, die als fehlerhaft erkannten und durch die Pixelmaske 13 maskierten Bereiche des Wetterradarbilds 1 durch einen Schätzwert J zu ersetzen, der an die Stelle des tatsächlichen Reflektivitätswerts gesetzt wird und dem jeweiligen Pixel 11 innerhalb der Pixelwerte 13 zugeordnet wird.

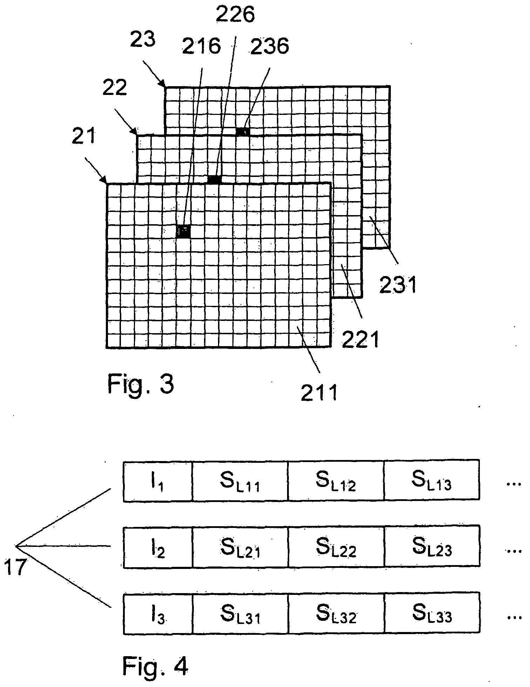

Für die Bestimmung der einzelnen Schätzwerte J für die Pixel 11 mit fehlerhaften Reflektivitätswerten IF innerhalb der Pixelmaske 13 wird eine Anzahl von Satellitenbildern 21, 22, ... herangezogen. Diese Satellitenbilder 21, 22, ... weisen dieselbe Größe und Form auf wie das Wetterradarbild 1, wobei einander entsprechende Pixel 16, 216, 226, 236 des Wetterradarbilds 1 und der Satellitenbilder 21, 22, ... jeweils demselben Teilgebiet 110 zugeordnet sind und jeweils einander gegenseitig zugeordnet sind (Fig. 3). Üblicherweise liegen die Satellitenbilder 21, 22 und das Wetterradarbild 1 nicht in derselben Auflösung vor. Für die Satellitenbilder 21, 22, ... ist üblicherweise eine unterschiedliche Auflösung und Zuordnung zwischen Pixeln 211, 221, 231 der Satellitenbilder 21, 22, ... und den Teilgebieten, für die das jeweilige Pixel einen Strahlungswert darstellt, vorgegeben wie zwischen Pixeln 11 des Wetterradarbilds 1 und den jeweils zugehörigen Teilgebieten 110. In diesem Fall werden die Satellitenbilder 21, 22, ... mit gängigen Verfahren der Bildbearbeitung interpoliert, verzerrt bzw. zugeschnitten, sodass sie dieselbe Größe und Form aufweisen wie das Wetterradarbild 1. Die zur Bildung der Schätzwerte J verwendeten Satellitenbilder 21, 22, ... weisen somit jeweils Pixel 211, 221, ... auf, die jeweils genau einem der Teilgebiete 110 sowie einem der Pixel 11 des Wetterradarbilds 1 zugeordnet werden können.
Die Satellitenbilder werden naturgemäß von einem Wettersatelliten 2 erstellt, der eine optische Aufnahmeeinheit aufweist, die ein Satellitenbild 21, 22, 23 des zu überwachenden Gebiets 14 der Erde bei unterschiedlichen Lichtwellenlängen I1, ..., I8 ermittelt. Typischerweise werden Aufnahmen bei drei bis zu zwanzig unterschiedlichen Wellenlängen vorgenommen, wobei insbesondere Strahlung im Bereich des sichtbaren Lichts, des ultravioletten Lichts und des infraroten Lichts detektiert wird. Dies entspricht etwa einer Lichtwellenlänge von 150 nm bis zu 1000 nm. Darüber hinaus ist es jedoch auch selbstverständlich möglich, Aufnahmen bei anderen Wellenlängen durchzuführen, etwa im langwelligeren Mikrowellenbereich zwischen 1µm und 20µm. Jedes der Satellitenbilder 21, 22, 23 entspricht einem Abbild des überwachten Gebiets 14 der Erde bei einer bestimmten Wellenlänge.
In einem vor oder nach der Bestimmung der Satellitenbilder 21, 22, 23 ablaufenden Schritt wird eine Umgebung 15 der Pixelmaske 13 bestimmt. Bei dieser Umgebung 15 handelt es sich vorzugsweise um diejenigen Pixel 11, die an Pixel 11 der Pixelmaske 13 angrenzen, ohne selbst in der Pixelmaske 13 zu liegen. Zwei Pixel können aneinander dann angrenzen, wenn sie unmittelbar nebeneinander gelegen sind, d. h. dass eine der beiden Pixelkoordinaten identisch ist und sich die zweite der beiden Pixelkoordinaten jeweils nur um eins unterscheidet. Der Umgebungsbegriff kann jedoch auch weiter gezogen werden, wobei gegebenenfalls auch Pixel 11 dann der Umgebung 15 der Pixelmaske 13 zugerechnet werden, wenn sie an ein Randpixel diagonal angrenzen, d.h. wenn sich die Koordinatenwerte beider Pixelkoordinaten jeweils um eins unterscheiden.
Es ist selbstverständlich auch möglich, den Umgebungsbegriff auch auf Pixel auszudehnen, deren Abstand vom Rand der Pixelmaske 13 einen bestimmten Abstand nicht übersteigt.
Ein Pixel 1 des Wetterradarbilds 1 kann dem Rand der Pixelmaske 13 dann als zugehörig angesehen werden, wenn es zumindest an ein Pixel grenzt, das der Pixelmaske 13 nicht zugehört und an zumindest ein Pixel grenzt, das der Pixelmaske 13 zugehört. Der Begriff des Angrenzens kann dabei analog den voranstehenden Ausführungen verstanden werden. Im vorliegenden Ausführungsbeispiel gehören nur diejenigen Pixel 11 der Umgebung 15 der Pixelmaske 13 an, die außerhalb der Pixelmaske 13 liegen.
Es kann der Fall eintreten, dass mehrere nicht zusammenhängende Bereiche von Pixeln 11 der Pixelmaske 13 zugeordnet sind. In diesem Fall kann die Umgebung 15 entweder für alle zusammenhängenden Bereiche gemeinsam bestimmt werden oder aber für jeden einzelnen zusammenhängenden Teilbereich 131 einzeln (Fig. 9) bestimmt werden. Für den für die Bestimmung des Zusammenhangs erforderlichen Begriff des Angrenzens können dabei die bereits beschrieben Definitionen herangezogen werden.

Mit den Strahlungswerten SI1, ... der Pixel 211, 221, ... der Satellitenbilder 21, 22, ... und den Reflektivitätswerten I1, ... der Pixel 11 des Wetterradarbilds 1 werden Eingangsdatensätze 17 (Fig. 4) erstellt, die anschließend einem Fitting-Verfahren zugrunde gelegt werden sollen. Eingangsdatensätze 17 werden nur von denjenigen Pixeln 11, 211, 221, 231 erstellt, die der Umgebung 15 der Pixelmaske zugehören.
Dabei wird für alle einander zugeordneten Pixel 11 des Wetterradarbilds 1 zu einem Pixel 211, 221, ... der Satellitenbilder 21, 22, ... innerhalb der Umgebung 15 der Pixelmaske jeweils ein Eingangsdatensatz 17 erstellt. Die Zuordnung der Pixel 11 des Wetterradarbilds 1 und sowie Pixel 211, 221, ... der Satellitenbilder 21, 22, ... ist, wie bereits erwähnt, dadurch begründet, dass die jeweiligen Reflektivitätswerte I1, ... und Strahlungswerte SI1, ... jeweils für das gleiche Teilgebiet 110 bestimmt wurden, d. h. jeder Eingangsdatensatz 17 enthält Daten, die ein und dasselbe Teilgebiet 110 betreffen. Es sind somit so viele Eingangsdatensätze 17 vorhanden, wie Pixel 11 in der Umgebung 15 vorhanden sind. Diese Eingangsdatensätze 17 werden einem Fitting-Verfahren zugrunde gelegt.
Ziel des Fitting-Verfahrens ist es, eine Fitting-Funktion f(SI1, ...) zu finden, die aufgrund der verfügbaren und korrekten Strahlungswerte SI1, ... der Satellitenbilder 21, 22, ... betreffend ein Teilgebiet 110 bzw. einander zugeordnete Pixel 11, 211, 221, 231 einen Schätzwert J bzw. Ersatzwert für den Reflektivitätswert 11, ... des jeweiligen Teilgebiets 110 ermittelt. Als Zielfunktion wird dem Fitting-Verfahren somit eine Fitting-Funktion f(SI1, ...) zugrunde gelegt, die aufgrund von angegebenen Strahlungswerten SI1, ... jeweils einen Schätzwert J für die Reflektivität I angibt.
Die Fitting-Funktion f(SI1, ...) wird mittels eines Klassifikationsverfahrens an die vorgegebenen Eingangsdatensätze angepasst und so vorgegeben, dass man bei Anwendung der Fitting-Funktion auf die einzelnen in einem Eingangsdatensatz 17 vorhandenen Strahlungswerte SI1, ... möglichst genau den im jeweiligen Eingangsdatensatz 17 vorhandenen Reflektivitätswert I1, ... erhält. Dabei können je nach Fitting-Verfahren und Anzahl der Eingangsdatensätze kleinere Diskrepanzen zwischen den in den Eingangsdatensätzen 17 vorgegebenen Reflektivitätswerten I1, ... und den mittels der Fitting-Funktion f(SI1, ...) erzielten Schätzwerten J bestehen. Ziel des Optimierungsverfahrens ist es, diese Diskrepanzen möglichst zu minimieren. Besonders vorteilhaft eignet sich hierfür z.B. ein Nearest-Neighbour Klassifikationsverfahren.
Mit dieser Funktion ist es möglich, anhand der vorliegenden Satellitenbilder 21, 22, ... pixelweise die Schätzwerte J für die fehlerhaften bzw. maskierten Reflektivitätswerte, im folgenden mit IF bezeichnet, des Wetterradarbilds 1 zu finden. Für die Bestimmung des Schätzwerts J mittels der Fitting-Funktion f in einem Pixel 16 innerhalb der Pixelmaske 13 des Wetterradarbilds 1 sind nur die in den einzelnen Satellitenbildern 21, 22, 23 gespeicherten Strahlungswerte SI1, ... des jeweils zugeordneten Pixels 216, 226, 236 heranzuziehen.
Jeder der fehlerhaften Reflektivitätswerte IF der Pixel 11 innerhalb der Pixelmaske 13 wird durch die für das jeweilige Pixel 11 ermittelten Schätzwerte J ersetzt.

Alternativ kann für jeden zusammenhängenden Teilbereich 131 separat eine Fitting-Funktion f' bestimmt werden, wobei diese Fitting-Funktion f jeweils nur auf den jeweiligen zusammenhängenden Teilbereich 131 der Pixel angewendet wird.

## Patentansprüche

1. Verfahren zur Berichtigung von digitalen Wetterradarbildern, wobei
a) das Wetterradarbild (1) in Form eines zweidimensionalen Digitalbilds vorliegt, wobei jedes Pixel (11) des Wetterradarbilds (1) jeweils einem Teilgebiet (110) des mit dem Wetterradar (12) überwachten Gebiets (14) zugeordnet ist,
b) jedem Pixel (11) ein Reflektivitätswert zugeordnet ist und jeder Reflektivitätswert (I1, ...) der mit dem Wetterradar (12) ermittelten elektromagnetischen Reflektivität der Luftschichten im Bereich des dem jeweiligen Pixel (11) zugeordneten Teilgebiets (110) entspricht, und wobei
c) das Wetterradarbild (1) in einem vorab bekannten und durch eine vorgegebene Pixelmaske (13) gegebenen Bildbereich fehlerhafte Reflektivitätswerte (IF) aufweist,
**dadurch gekennzeichnet,**
d) **dass** eine Anzahl von Satellitenbildern (21, 22, ...) herangezogen wird, die das vom Wetterradar (1) überwachte Gebiet (14) abbilden, wobei die einzelnen Satellitenbilder (21, 22, ...) die vom vom Wetterradar (12) überwachten Gebiet (14) reflektierte Strahlung bei unterschiedlichen Wellenlängen (I1 ... 18) darstellen,
e) **dass** den Pixeln (211, 221, ...) der Satellitenbilder (21) jeweils mehrere unterschiedliche Strahlungswerte (SI1, ...) bei vorgegebenen Wellenlängen (I1, ...) zugeordnet werden, wobei die Pixel (211, 221, ...) der Satellitenbilder (21, 22, ...) den jeweiligen Strahlungswert (SI1, ...) eines vom Wetterradar (12) überwachten und dem jeweiligen Pixel (11) des Wetterradarbilds (1) zugeordneten Teilgebiets (110) zugeordnet enthalten,
f) wobei jeweils diejenigen Pixel (211, 221, ...) der Satellitenbilder (21, 22, ...) und diejenigen Pixel (11) des Wetterradarbilds (1) einander gegenseitig zugeordnet werden, denen dasselbe Teilgebiet (110) zugeordnet ist,
g) **dass** die in der vorgegebenen Umgebung (15) der Pixelmaske (13) befindlichen Pixel (16) des Wetterradarbilds (1) ausgewählt werden,
h) **dass** für jedes der ausgewählten Pixel (16) des Wetterradarbilds (1) Eingangsdatensätze (17) für ein Fitting-Verfahren erstellt werden, die jeweils den Reflexionswert (I1, ...) des Wetterradarbilds (1) in einem der ausgewählten Pixel (16) sowie die Strahlungswerte (SI1, SI2, SI3, ...) in den dem ausgewählten Pixel (16) zugeordneten Pixel (211, 221, ...) der Satellitenbilder (21, 22, ...) enthalten, denen dasselbe Teilgebiet (110) zugeordnet ist,
i) **dass** mittels des Fitting-Verfahrens eine Fitting-Funktion f(SI1, SI2, SI3, ...) erstellt wird, die bei gegebenen Werten für die Strahlungswerte (SI11, SI12, SI13, ...) einen Schätzwert (J) für den Reflektivitätswert (I1, ...) im selben Pixel (11) des Wetterradarbilds (1) und für dasselbe Teilgebiet (110) liefert,
wobei die Eingangsdatensätze (17) dem Fitting-Verfahren zugrunde gelegt werden, und
j) **dass** für jedes der Pixel (11) der Pixelmaske (13)
- die dem jeweiligen Pixel (11) des Wetterradarbilds (1) zugeordneten Pixel (211, 221, ...) der Satellitenbilder (21, 22, ...) herangezogen werden und die Fitting-Funktion (f) auf deren Strahlungswerte (SI11, SI12, SI13, ...) angewendet wird, und
- der aus der Fitting-Funktion (f) resultierende Schätzwert J= f(SI1, SI2, SI3, ...) ermittelt wird und
- die fehlerhaften Reflektivitätswerte (IF) des jeweiligen Pixels (11) durch den Schätzwert (J) ersetzt werden.

2. Verfahren nach Anspruch 1, **dadurch gekennzeichnet, dass** die Zeitspanne zwischen der Aufnahme des Wetterradarbilds (1) und der Aufnahme der Satellitenbilder (21, 22, ...) unterhalb eines vorgegebenen Schwellenwerts liegt, insbesondere dass das Wetterradarbild (1) und die Satellitenbilder (21, 22, ...) am selben Tag aufgenommen werden.

3. Verfahren nach Anspruch 1 oder 2, **dadurch gekennzeichnet, dass** als Fitting-Verfahren ein Klassifikationsverfahren verwendet wird.

4. Verfahren nach einem der vorangehenden Ansprüche, **dadurch gekennzeichnet, dass** die Umgebung (15) diejenigen Pixel umfasst, die, vorzugsweise unmittelbar, an die Randpixel (11) der Pixelmaske (13) angrenzen und/oder außerhalb der Pixelmaske (13) liegen.

5. Verfahren nach einem der vorangehenden Ansprüche, **dadurch gekennzeichnet, dass** die Pixelmaske (13) nach vorab vorgegebenen Kriterien bestimmt wird.

6. Verfahren nach Anspruch 5, **dadurch gekennzeichnet, dass** Bereiche (19a) des Wetterradarbilds (1), die die Form von gerade Linien oder Kreisbögen aufweisen, als fehlerhaft angesehen werden und der Pixelmaske (13) zugeordnet werden.

7. Verfahren nach Anspruch 5 oder 6, **dadurch gekennzeichnet, dass** eine Pixelmaske (13) erstellt wird, indem
- für jedes der Pixel (11) des Wetterradarbilds (1) eine Pixelumgebung (17) bestimmt wird
- die Pixelumgebung (17) jeweils mit einer der Form und Größe der Pixelumgebung (17) entsprechenden, vorgegebenen Textur (40) verglichen wird, wobei ein Vergleichsmaß ermittelt wird und
- das Vergleichsmaß mit einem vorgegebenen Schwellenwert verglichen wird,
- wobei je nach Überschreiten oder Unterschreiten des Schwellenwerts durch das Vergleichsmaß das jeweilige Pixel (11) der Pixelmaske (13) zugeordnet wird.

8. Verfahren nach Anspruch 5, 6 oder 7, **dadurch gekennzeichnet,**
**dass** zur Erstellung der Pixelmaske (13) für ein Wetterradarbild (1) eine Vielzahl von weiteren Wetterradarbildern (18) desselben zu überwachenden Gebiets (14) zu unterschiedlichen Zeitpunkten herangezogen wird,
**dass** die weiteren Wetterradarbilder (18) auf Abschattungsbereiche (19) untersucht werden, die in den weiteren Wetterradarbildern (18) unabhängig von Tages- und Jahreszeit sowie Wetterlage identische, insbesondere sehr geringe, zugeordnete Reflektivitätswerte, vorzugsweise Null, aufweisen, und
**dass** die Pixel (11) der Abschattungsbereiche (19) der Pixelmaske (13) zugeordnet werden.

9. Verfahren nach einem der vorangehenden Ansprüche, **dadurch gekennzeichnet, dass** voneinander unterschiedliche weitere Pixelmasken (130), insbesondere nach einem oder mehreren der Ansprüche 6 bis 8, erstellt werden und
dass eine Pixelmaske (13) erstellt wird, wobei ein Pixel (11) der Pixelmaske (13) dann zugeordnet wird, wenn zumindest eine oder zumindest eine vorgegebene Anzahl der weiteren Pixelmasken (130) dieses Pixel (11) umfasst.

10. Verfahren nach einem der vorangehenden Ansprüche, **dadurch gekennzeichnet, dass** für jeden zusammenhängenden Teilbereich (131) separat eine weitere Fitting-Funktion f' bestimmt werden, wobei diese weitere Fitting-Funktion f' bei der Bestimmung des jeweiligen Schätzwerts (J) nur auf die Pixel (11) des jeweiligen zusammenhängenden Teilbereich (131) angewendet wird.

11. Datenträger, auf dem ein Computerprogramm zur Durchführung eines Verfahrens nach einem der vorangehenden Ansprüche abgespeichert ist.

12. Computerprogramm zur Durchführung eines Verfahrens gemäß einem der Ansprüche 1 bis 10.

## Claims

1. Method for correction of digital weather radar images, wherein
a) the weather radar image (1) is in the form of a two-dimensional digital image, wherein each pixel (11) of the weather radar image (1) is assigned to a sub-zone (110) of the zone (14) monitored by the weather radar (12),
b) each pixel (11) is associated with a reflectivity value and each reflectivity value (I1, ...) corresponds to the electromagnetic reflectivity of the layers of air in the region of the sub-zone (110) associated with the respective pixel (11) and determined by the weather radar (12), and wherein
c) the weather radar image (1) has defective reflectivity values (IF) in a previously known image area given by a pixel mask (13),
**characterised in that,**
d) a number of satellite images (21, 22, ...) represent the zone (14) monitored by the weather radar (1), wherein the individual satellite images (21, 22, ...) map the radiation that is reflected from the zone (14) monitored by the weather radar (12) at different wavelengths (I1 ... I8),
e) the pixels (211, 221, ...) of the satellite images (21) are each associated with a plurality of different radiation values (SI1, ...) at predetermined wavelengths (I1, ...), wherein the pixels (211, 221 , ...) of the satellite images (21, 22, ...) monitored by the weather radar (12) are associated with the respective radiation values (SI1, ...) of one of the sub-zones (110) associated with the respective pixels (11) of the weather radar image (1),
f) each of the pixels (211, 221, ...) of the satellite images (21, 22, ...) and the pixels (11) of the weather radar image (1) are mutually associated with each other and associated with the same sub-zone (110).
g) the pixels (16) located in the predetermined surroundings (15) of the pixel mask (13) of the weather radar image (1) are selected,
h) input data sets (17) are created for each of the selected pixels (16) of the weather radar image (1) for a fitting method, wherein each contains the reflectivity values (I1, ...) of the weather radar image (1) in one of the selected pixels (16) as well as the radiation values (SI1, SI2, SI3, ...), in which the pixels (211, 221, ...) associated with the selected pixels (16) of the satellite images (21, 22, ...) are included and associated with the same sub-zone (110),
i) by means of the fitting method, a fitting function f (SI1, SI2, SI3, ...) is created, which, with given values for the radiation values (SI11, SI12, SI13, ...), provides an estimated value (J) for the reflectivity values (I1, ...) in the same pixel (11) of the weather radar image (1) and for the same sub-zone (110),
wherein the input data sets (17) are taken as a basis for the fitting method, and
j) for each of the pixels (11) of the pixel mask (13):
- the respective pixels (11) of the weather radar image (1) associated with the pixels (211, 221, ...) of the satellite images (21, 22, ...) are called up and the fitting function (f) is applied to their radiation values (SI11, SI12, SI13, ...), and
- the estimated value J = f (SI1, SI2, SI3, ...) resulting from the fitting function (f) is determined, and
- the defective reflectivity value (IF) of the respective pixel (11) is replaced by the estimated value (J).

2. Method according to claim 1, **characterised in that** the time interval between the recording of the weather radar image (1) and the recording of the satellite images (21, 22, ...) lies below a predetermined threshold value, in particular that the weather radar image (1) and the satellite images (21,22, ...) are recorded on the same day.

3. Method according to claim 1 or 2, **characterised in that** a classification method is used as a fitting method.

4. Method according to any one of the preceding claims, **characterised in that** the surroundings (15) comprise those pixels that are preferably directly adjacent to the boundary pixel (11) of the pixel mask (13) and/or lie outside the pixel mask (13).

5. Method according to any one of the preceding claims, **characterised in that** the pixel mask (13) is determined in advance according to predetermined criteria.

6. Method according to claim 5, **characterised in that** the areas (19a) of the weather radar image (1), which have the form of straight lines or arcs are considered to be defective and are associated with the pixel mask (13).

7. Method according to claim 5 or 6, **characterised in that** a pixel mask (13) is created, wherein
- a pixel area (17) is determined for each of the pixels (11) of the weather radar image (1),
- the pixel surroundings (17) are each compared with a predetermined structure (40) having the corresponding shape and size of the pixel area (17), wherein a comparative benchmark is determined, and
- the comparison benchmark is compared with a predetermined threshold value,
- wherein the respective pixels (11) are associated with the pixel mask (13) as a function of the overshooting or undershooting of the threshold by the comparison benchmark.

8. Method according to claim 5, 6 or 7, **characterised in that**
- a plurality of further weather radar images (18) of the zone (14) to be monitored are recorded at different points in time in order to create the pixel mask (13) for a weather radar image (1),
- the further weather radar images (18) are tested for shadowed areas (19), which, in the further weather radar images (18) and regardless of the day and time of year as well as identical weather conditions, have particularly very small associated reflectivity values, preferably zero, and
- the pixels (11) of the shadowed areas (19) are associated with the pixel mask (13).

9. Method according to any one of the preceding claims, **characterised in that** further mutually different pixel masks (130) are created, in particular according to one or more of the claims 6 to 8, and
- a pixel mask (13) is created, wherein a pixel (11) is then associated with the pixel mask (13), when at least one, or at least a predetermined number of further, pixel masks (130) comprises this pixel (11).

10. Method according to any one of the preceding claims, **characterised in that** a further fitting function f' can be separately determined for each interrelated sub-zone (131), wherein, in the determination of the respective estimated value (J), the further fitting function f' is only applied to the pixel (11) of the respective associated sub-zone (131).

11. Data medium on which a computer programme is stored for performing a method according to any one of the preceding claims.

12. Computer programme for performing a method according to any one of the claims 1 to 10.

## Revendications

1. Procédé de rectification d'images radar météorologique numériques,
a) l'image radar météorologique (1) se présente sous la forme d'une image numérique à deux dimensions, chaque pixel (11) de l'image radar météorologique (1) étant respectivement affecté à un secteur partiel (110) du secteur (14) surveillé avec le radar météorologique (12),
b) une valeur de réflectivité étant affectée à chaque pixel (11) et chaque valeur de réflectivité (I1, ...) correspondant à la réflectivité électromagnétique des couches d'air déterminée avec le radar météorologique (12) dans la zone du secteur partiel (110) affecté au pixel (11) respectif, et
c) l'image radar météorologique (1) présentant des valeurs de réflectivité (IF) incorrectes dans une zone d'image connue au préalable et donnée par un masque de pixels (13) prédéfini,
**caractérisé en ce**
d) **qu'**il est fait appel à un nombre d'images satellite (21, 22, ...) qui reproduisent le secteur (14) surveillé par le radar météorologique (1), les différentes images satellite (21, 22, ...) représentant le rayonnement réfléchi par le secteur (14) surveillé par le radar météorologique (12) pour différentes longueurs d'ondes ( I1, ...I8),
e) en ce que respectivement plusieurs valeurs de rayonnement (SI1, ...) différentes sont affectées aux pixels (211, 221, ...) des images satellite (21) pour des longueurs d'ondes (I1, ...) prédéfinies, les pixels (211, 221, ...) des images satellite (21, 22, ...) contenant la valeur de rayonnement (SI1, ...) respective d'un secteur partiel (110) surveillé par le radar météorologique (12) et affecté au pixel (11) respectif de l'image radar météorologique (1),
f) respectivement les pixels (211, 221, ...) des images satellite (21, 22, ...) et les pixels (11) de l'image radar météorologique (1) auxquels est affecté le même secteur partiel (110) étant affectés mutuellement les uns aux autres,
g) en ce que les pixels (16) sélectionnés de l'image radar météorologique (1) situés dans l'environnement (15) prédéfini du masque de pixels (13) sont sélectionnés,
h) en ce que, pour chacun des pixels (16) de l'image radar météorologique (1), des jeux de données d'entrée (17) pour un procédé de fitting sont établis, qui contiennent respectivement la valeur de réflexion (I1, ...) de l'image radar météorologique (1) dans un des pixels (16) sélectionnés ainsi que les valeurs de rayonnement (SI1, SI2, SI3, ...) dans les pixels (211, 221, ...) des images satellite (21, 22, ...) affectés au pixel (16) sélectionné auxquels est affecté le même secteur partiel (110),
i) en ce que, au moyen du procédé de fitting, il est établi une fonction de fitting f(SI1, SI2, SI3, ...) qui, pour des valeurs données pour les valeurs de rayonnement (SI1, SI2, SI3, ...), fournit une valeur d'estimation (J) pour la valeur de réflectivité (I1, ...) dans le même pixel (11) de l'image radar météorologique (1) et pour le même secteur partiel (110),
les jeux de données d'entrée (17) sont pris comme référence pour le procédé de fitting, et
j) en ce que, pour chacun des pixels (11) du masque de pixels (13),
- il est fait appel aux pixels (211, 221, ...) des images satellite (21, 22, ...) affectés au pixel (11) respectif de l'image radar météorologique (1), et la fonction de fitting (f) est appliquée à leurs valeurs de rayonnement (SI11, SI12, SI13, ...), et
- la valeur d'estimation J=f (SI1, SI2, SI3, ...) résultant de la fonction de fitting (f) est déterminée, et
- les valeurs de réflectivité (IF) incorrectes du pixel (11) respectif sont remplacées par la valeur d'estimation (J).

2. Procédé selon la revendication 1, **caractérisé en ce que** la période entre l'enregistrement de l'image radar météorologique (1) et l'enregistrement des images satellite (21, 22, ...) est inférieure à une valeur de seuil prédéfinie, en particulier **en ce que** l'image radar météorologique (1) et les images satellite (21, 22, ...) sont enregistrées le même jour.

3. Procédé selon la revendication 1 ou 2, **caractérisé en ce qu'**un procédé de classification est utilisé en tant que procédé de fitting.

4. Procédé selon l'une des revendications précédentes, **caractérisé en ce que** l'environnement (15) comprend les pixels qui jouxtent, de préférence immédiatement, les pixels marginaux (11) du masque de pixels (13) et/ou qui sont situés à l'extérieur du masque de pixels (13).

5. Procédé selon l'une des revendications précédentes, **caractérisé en ce que** le masque de pixels (13) est déterminé selon des critères prédéfinis au préalable.

6. Procédé selon la revendication 5, **caractérisé en ce que** des zones (19a) de l'image radar météorologique (1) qui présentent la forme de lignes droites ou d'arcs de cercle sont considérées comme incorrectes et sont affectées au masque de pixels (13).

7. Procédé selon la revendication 5 ou 6, **caractérisé en ce qu'**il est établi un masque de pixels (13) par le fait que
- il est déterminé un environnement de pixels (17) pour chacun des pixels (11) de l'image radar météorologique (1),
- l'environnement de pixels (17) est comparé à une texture (40) prédéfinie correspond à la forme et à la grandeur de l'environnement de pixels (17), une dimension de comparaison étant déterminée, et
- la dimension de comparaison est comparée à une valeur de seuil prédéfinie,
- le pixel (11) étant affecté au masque de pixels (13) respectivement en fonction du passage au-dessus ou du passage au-dessous de la valeur de seuil par la dimension de comparaison.

8. Procédé selon la revendication 5, 6 ou 7, **caractérisé en ce que**,
pour l'établissement du masque de pixels (13) pour une image radar météorologique (1), il est fait appel à une pluralité d'autres images radar météorologiques (18) du même secteur (14) à surveiller à des moments différents,
**en ce que** les autres images radar météorologiques (18) font l'objet d'une recherche de zones d'ombrage (19) qui présentent dans les autres images radar météorologiques (18), indépendamment de l'heure et de la saison ainsi que la météorologie, des valeurs de réflectivité affectées identiques, en particulier très faibles, de préférence nulles, et
**en ce que** les pixels (11) des zones d'ombrage (19) sont affectés au masque de pixels (13).

9. Procédé selon l'une des revendications précédentes, **caractérisé en ce que** d'autres masques de pixels (130) différents les uns des autres sont établis, en particulier selon une ou plusieurs des revendications 6 à 8, et
**en ce qu'**un masque de pixels (13) est établi, un pixel (11) étant ensuite affecté au masque de pixels (13) si au moins un nombre, ou au moins un nombre prédéfini, des autres masques de pixels (130) comprend ce pixel (11).

10. Procédé selon l'une des revendications précédentes, **caractérisé en ce que**, pour chaque zone partielle (131) continue, il est défini séparément une autre fonction de fitting f', cette autre fonction de fitting f' n'étant appliquée, lors de la détermination de la valeur d'estimation (J) respective, qu'aux pixels (11) de la zone partielle (131) continue respective.

11. Support de données sur lequel est stocké un programme informatique destiné à la réalisation d'un procédé selon l'une des revendications précédentes.

12. Programme informatique destiné à la réalisation d'un procédé selon l'une des revendications 1 à 10.
